# EUROPEAN PATENT SPECIFICATION

(11) **EP 0 726 466 B1**
(45) Date of publication and mention of the grant of the patent: **24.04.2002**
(21) Application number: 93919596.2
(22) Date of filing: 31.08.1993
(51) Int. Cl.: G01N 35/10

(54) **PIPETTING APPARATUS EQUIPPED WITH CLOSURE DETECTION FUNCTION**
PIPETTIERGERÄT MIT FUNKTION ZUM NACHWEIS DES VERSCHLUSSES
APPAREIL DE PIPETTAGE DOTE D'UNE FONCTION DE DETECTION DE FERMETURE

(43) Date of publication of application: 14.08.1996
(73) Proprietor: Aloka Co. Ltd., Mitaka-shi, Tokyo 181 (JP); ABBOTT LABORATORIES, Abbott Park, Illinois 60064-3500 (US)
(72) Inventor: TAKEDA, Masaaki, Mitaka-shi Tokyo 181 (JP); KATO, Yuko, Mitaka-shi Tokyo 181 (JP); KATAGI, Hitomi, Mitaka-shi Tokyo 181 (JP); KAWANABE, Junichi, Mitaka-shi Tokyo 181 (JP)
(74) Representative: Grünecker, Kinkeldey, Stockmair & Schwanhäusser Anwaltssozietät
(86) International application number: JP9301227
(87) International publication number: WO9506878

(56) References cited:
- EP-A- 0 341 438
- WO-A-92/08545
- JP-A- 1 219 564
- JP-A- 56 164 957
- JP-A- 61 200 458
- JP-A- 62 024 151
- JP-A- 63 094 149
- JP-U- 62 020 372
- PATENT ABSTRACTS OF JAPAN vol. 010, no. 003 (P-418), 8 January 1986 & JP 60 161558 A (OLYMPUS KOGAKU KOGYO KK), 23 August 1985,

## Description

### [Detailed Description of the Invention]

### [Industrial Field of the Invention]

The present invention relates to clot detection in a pipetting apparatus, and more particularly relates to the detection of clot caused when substance in a liquid sample is adhered to a tip portion of a sampling nozzle, for instance.

### [Prior Art]

In testing of a sample, it is indispensable to perform pipetting operation which obtains any required volume of the sample by aspiration. In general, the pipetting operation is carried out by inserting a nozzle connected to a suction pump into the sample contained in a test tube or the like to aspirate and obtain a required volume of the sample. As an apparatus for performing the pipetting operation, a pipetting apparatus is so far well known.

Recently, in particular, an automatic pipetting apparatus has been widely used, in which the respective pipetting processes can be carried out automatically and continuously without assistance of an operator.

In the automatic pipetting apparatus as described above, the constituents of blood such as serum or plasma collected from a living body is often used as a sample to be pipetted. The pipetted sample is mixed with a chemical reagent or others to carry out a predetermined test.

The blood serum or plasma is obtained from blood by a centrifugal separation, and in many cases thus obtained serum or plasma is used as it is for the sample. When thus obtained blood sample is pipetted, there is a problem in that the tip portion of the nozzle is likely to be clotted with foreign matters such as solid substance or fibrous substance contained in the sample or a serum separating medium, thus resulting in clotting condition. When the pipetting operation is carried out under the clotting condition, there arises a problem in that the accuracy of pipetting is deteriorated.

In view of this problem, a method for detecting clot caused in an automatic pipetting apparatus has been proposed in Japanese Patent Application Laying Open (KOKAI) No. 2-184762. In this conventional method, the pressure within the nozzle is detected by a pressure sensor; changes in pressure detected by the pressure sensor are monitored; and the clotting condition can be detected when waveform indicating the pressure changes shifts to a negative value side abruptly. In more detail, the pressure is sampled for each predetermined period, and the difference between the current detected pressure and the preceding detected pressure is compared with a threshold value to discriminate the clotting condition.

### [Problems to be solved by the Invention]

In the conventional pipetting apparatus, however, the sampling period is set short in order to detect the clotting condition as soon as possible, and further since the threshold value is determined so as to correspond to the short sampling period. For this reason, there is a problem in that it is impossible to detect an imperfect clotting condition, because under the imperfect clotting condition the pressure change is so small as not to be detectable by this detecting method of the conventional pipetting apparatus. Therefore, in the conventional apparatus, there is a problem that, when the pipetting accuracy is deteriorated due to such imperfect clotting condition, it has been impossible to detect such undesirable condition.

In order to overcome the above-mentioned problems, the present invention has been made. Therefore, it is an object of the present invention to provide an automatic pipetting apparatus which can detect the imperfect clotting condition as well as the perfect clotting condition.

### [Means for Solving the Problems]

To achieve the above-mentioned object, the present invention is characterized by a pipetting apparatus provided with clot detection, which comprises: a nozzle for aspirating a sample; a pressure sensor for measuring pressure in the nozzle; a plurality of pressure difference calculating circuits each for inputting an output of the pressure sensor and obtaining a pressure difference at a different pressure calculation period, respectively; a plurality of discriminating circuits each having a different discrimination threshold value determined according to each of the pressure calculation periods; and an alarm circuit for outputting a clot alarm signal when at least one of the discriminating circuits discriminates that the obtained pressure difference exceeds the discrimination threshold value.

### [Operation of the Invention]

In the construction as described above, the pressure in the nozzle can be detected directly or indirectly by the pressure sensor, and the measured pressure value is transmitted to a plurality of pressure difference calculating circuits. Each of the pressure difference calculating circuits has its own different pressure calculation period, so that the pressure difference can be obtained for each calculation period. A plurality of the pressure differences thus obtained are transmitted to corresponding discriminating circuits for comparison with the predetermined threshold values, respectively. Further, when at least one of the discriminating circuits discriminates the presence of clotting condition, the alarm circuit outputs a clot alarm signal. In the pipetting apparatus according to the present invention, since there are provided a plurality of calculation periods which monitor the pressure respectively, pressure waveforms indicative of imperfect clotting conditions in addition to the pressure waveform indicative of the perfect clotting condition can be discriminated, thus enabling a further fine clot detection.

### [Embodiments]

The preferred embodiment of the present invention will be described hereinbelow with reference to the attached drawings.

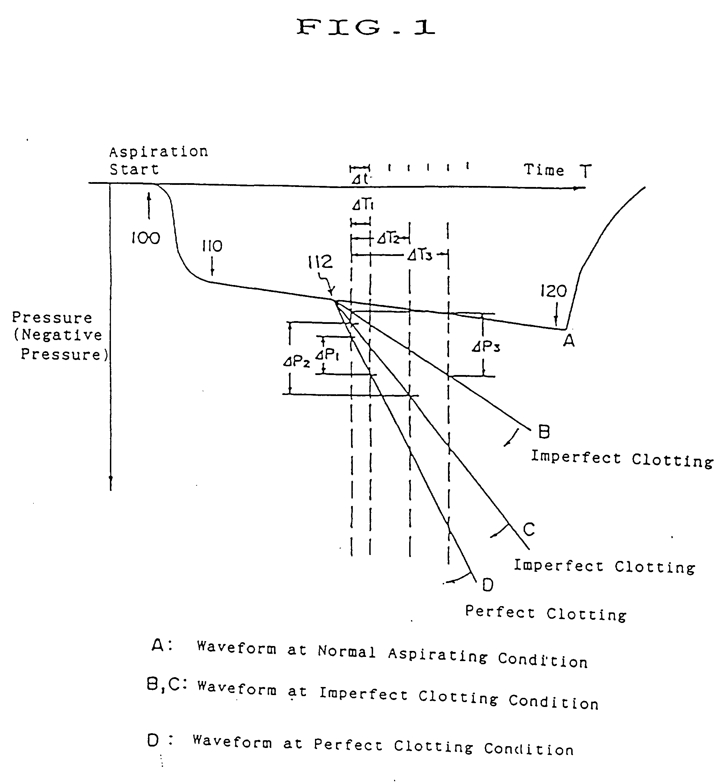

The principle of the present invention is first explained with reference to Fig. 1. Fig. 1 represents some pressure waveforms obtained when a sample is aspirated by a nozzle, in which the abscissa indicates the time and the ordinate indicates the pressure (negative pressure). When the aspiration begins at the time indicated by the numeral 100 in Fig. 1, the pressure in the nozzle changes into the negative pressure side sharply. Thereafter, when no clotting condition occurs, the pressure changes gradually for a predetermined time period between the time point 110 and the time point 120 as shown by the line A. On the other hand, when the nozzle is clotted perfectly, the pressure waveform descends abruptly and the pressure changes into the negative pressure side greatly as shown by the line D, immediately after the clotting condition occurs. In the conventional apparatus, only the sharp inclination as shown by the line D has been detected.

In practice, however, the nozzle clotting condition is caused by various ways. Namely, there are cases where the nozzle is clotted momentarily and perfectly and where the nozzle is clotted gradually. Further, there is a case that the sample flows at an extremely slow speed although the nozzle is not clotted. Therefore, it is impossible to maintain high pipetting accuracy only by monitoring the pressure waveform as shown by the line D.

In the apparatus according to the present invention, therefore, there are provided a plurality of the pressure difference calculation periods to obtain the pressure difference at each of the calculation periods. The obtained pressure differences are compared with the threshold values determined according to the respective calculation periods, respectively, so that both the perfect and imperfect clotting conditions can be detected.

The lines B and C shown in Fig. 1 represent the pressure waveforms caused by the imperfect clotting conditions. In order to detect such waveforms as described above, it is necessary to set the calculation period to a relatively long time. This is because the waveforms beginning from a clot generation point 112 fluctuate up and down irregularly, although they are indicated by straight lines in Fig. 1. Therefore, it becomes possible to detect the clotting conditions reliably only when the calculation time period is set to a relatively long time.

Accordingly, in the pipetting apparatus according to the present invention, when the perfect clotting condition as shown by the line D is required to be detected, the pressure difference ΔP1 between the preceding pressure and the current pressure is obtained for each predetermined sampling time Δt (= ΔT1) in the same way as with the case of the conventional apparatus. Further, in order to detect imperfect clotting conditions (the feature of the present invention), the pressure change rate is obtained on the basis of the gradient of the lines B or C for the calculation periods which are integer times longer than the sampling time Δt. As a result, the imperfect clotting condition can be detected based on the obtained pressure difference which is larger than ΔPI.

In more detail, in Fig. 1, in the case of the imperfect clotting condition as shown by C, the pressure difference ΔP2 is obtained for the calculation period ΔT2 (e.g., 3 x Δt) ; and in the case of the imperfect clotting condition as shown by B, the pressure difference ΔP3 is obtained for the calculation period ΔT3 (e.g., 5 x Δt).

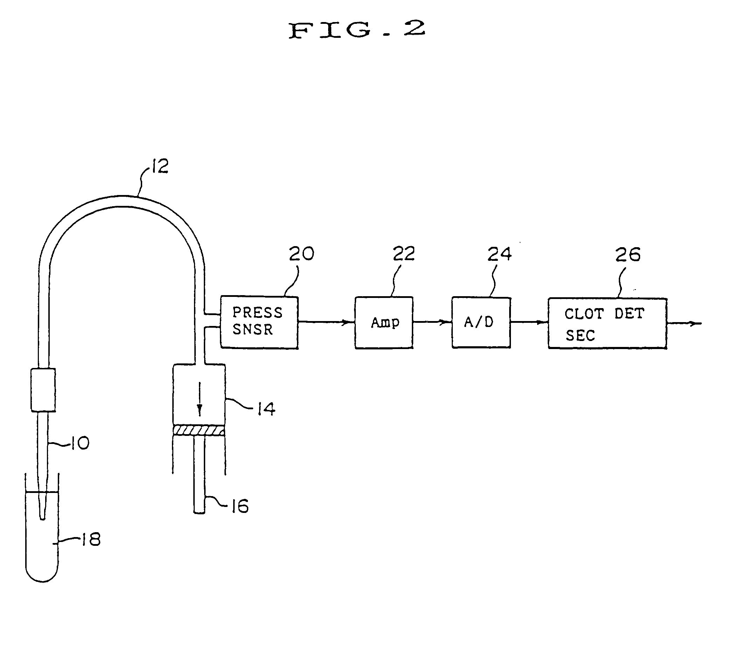

Fig. 2 is a block diagram showing a preferred embodiment of the pipetting apparatus according to the present invention. In the drawing, a nozzle 10 for aspirating a sample is connected to a pump 14 through an air hose 12. When a piston 16 is pulled down in the pump 14, the inner pressure within the air hose 12 and the nozzle 10 is reduced, so that the sample 18 can be aspirated. At this point, the pressure is detected by a pressure sensor 20 connected to the air hose 12. The detected pressure signal is amplified by an amplifier 22, converted into a digital signal by an A/D converter 24. The digital signal is then supplied to a clot detecting section 26.

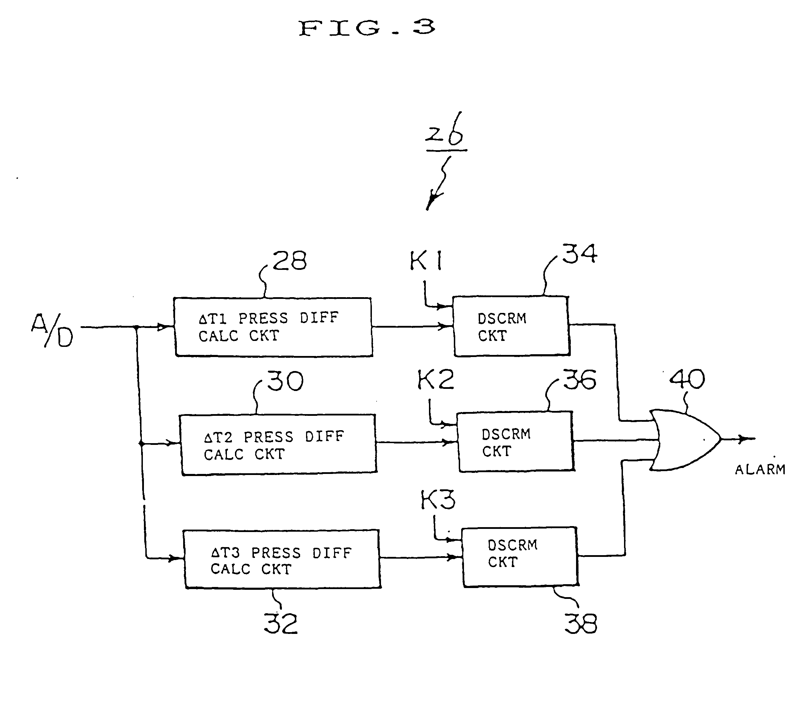

Fig. 3 is a block diagram showing the practical configuration of the clot detecting section 26, in which three calculation periods are provided by way of example.

In this embodiment, the output signal of the A/D converter 24 is inputted to three pressure difference calculating circuits 28, 30 and 32. The calculating circuit 28 calculates the pressure difference for each sampling time Δt (= ΔT1); the calculating circuit 30 calculates the pressure difference in the calculation period ΔT2; and the calculating circuit 32 calculates the pressure difference in the calculation period ΔT3, respectively. In each of the calculating circuits 28, 30 and 32, the pressure difference is also calculated for each sampling time Δt, and the calculated results are updated, respectively. The output of each of the calculating circuits 28, 30 and 32 is transmitted to each of three pressure change rate discriminating circuits 34, 36 and 38 connected to the corresponding calculating circuits 28, 30 and 32, respectively. In the pressure change rate discriminating circuits, each of the transmitted outputs is compared with each of predetermined threshold values K1, K2 and K3 which have been set so as to correspond to the respective calculation periods, respectively. In this case, since the calculation period ΔT1 is extremely short, a relatively large threshold value K1 is set to detect a sharp inclination of a waveform. On the other hand, the threshold value K3 corresponding to the calculation period ΔT3 is set into a relatively small value so as to be able to detect an imperfect clotting condition caused when the nozzle is being gradually clotted, for instance. Further, the threshold value K2 is set into a substantially mid-value between the threshold values K1 and K3.

In case any of the pressure change rate discriminating circuits discriminates "perfect clot" or "imperfect clot", an OR gate 40 generates an alarm signal, so that an alarm circuit (not shown) provided at the rear stage of the discriminating circuits is activated to generate a buzzer sound or display a predetermined alarm display. Further, it is also possible to separate the adhered substance from the nozzle by stopping the aspirating operation and further dispensing a small volume of the aspirated liquid sample from the nozzle.

Further, in the above-mentioned embodiments, three calculation periods are determined. Without being limited thereto, however, it is of course possible to provide four or more calculation periods. When the number of the calculation periods increases, it becomes possible to detect the clotting condition in more fine way, thus enabling to further improve the pipetting accuracy.

### [Advantageous Effect of the Inventionl

As described above, according to the present invention, since a plurality of calculation periods are set, it is possible to detect not only the perfect clotting condition but also the imperfect clotting condition, thus enabling a fine clot detection and thereby improving pipetting accuracy.

### [Brief Explanation of the drawings]

Fig. 1 is an aspiration waveform diagram for assistance in explaining the principle of clot detection according to the present invention;
Fig. 2 is a block diagram showing the entire configuration of the pipetting apparatus according to the present invention; and
Fig. 3 is a block diagram showing the practical circuit configuration in the clot detection section 26.

### [Explanation of Reference Numerals]

- 10: Nozzle
- 12: Air hose
- 14: Pump
- 20: Pressure sensor
- 26: Clot detecting section
- 28, 30, 32: Pressure difference calculating circuits
- 34, 36, 38: Discriminating circuits

## Claims

1. A pipetting apparatus provided with clot detection, comprising:
a nozzle for aspirating a sample;
a pressure sensor for measuring pressure in said nozzle;
a plurality of pressure difference calculating circuits each for inputting an output of said pressure sensor and obtaining a pressure difference at a different pressure calculation period, respectively;
a plurality of discriminating circuits each having a different discrimination threshold value determined according to each of the pressure calculation periods; and
an alarm circuit for outputting a clot alarm signal when at least one of said discriminating circuits discriminates that the obtained pressure difference exceeds the discrimination threshold value.

## Patentansprüche

1. Pipettierungsvorrichtung mit einer Klumpungsfeststellung, wobei die Vorrichtung umfasst:
eine Düse zum Ansaugen einer Probe,
einen Drucksensor zum Messen des Drucks in der Düse,
eine Vielzahl von Druckdifferenz-Berechnungsschaltungen, um jeweils eine Ausgabe des Drucksensors einzugeben und eine Druckdifferenz für eine unterschiedliche Druckberechnungsperiode zu erhalten,
eine Vielzahl von Diskriminierungsschaltungen mit jeweils einem unterschiedlichen Diskriminierungsschwellenwert, der in Übereinstimmung mit den Druckberechnungsperioden bestimmt ist, und
eine Alarmschaltung zum Ausgeben eines Klumpungsalarmsignals, wenn wenigstens eine der Diskriminierungsschaltungen bestimmt, dass die erhaltene Druckdifferenz den Diskriminierungsschwellenwert überschreitet.

## Revendications

1. Appareil de pipetage muni d'un dispositif de détection de caillot, comprenant
une buse pour aspirer un échantillon ;
un capteur de pression pour mesurer la pression dans ladite buse ;
une pluralité de circuits de calcul de différence de pression chacun recevant en entrée une sortie dudit capteur de pression et obtenant une différence de pression à une période de calcul de pression différente respectivement ;
une pluralité de circuits de discrimination ayant chacun une valeur de seuil de discrimination différente déterminée conformément à chacune des périodes de calcul de pression ; et
un circuit d'alarme pour fournir en sortie un signal d'alarme de caillot lorsqu'au moins l'un desdits circuits de discrimination discrimine le fait que la différence de pression obtenue dépasse la valeur de seuil de discrimination.
